Europäisches Patentamt

European Patent Office

Office européen des brevets

(19)

(11) Publication number: **0 192 876 B1**

# EUROPEAN PATENT SPECIFICATION

(12)

(45) Date of publication of patent specification: **17.07.91**   (51) Int. Cl.⁵: **G01S 1/56**, G01S 1/16

(21) Application number: **85307031.6**

(22) Date of filing: **02.10.85**

(54) Split gate preprocessor.

(30) Priority: **24.12.84 US 685830**

(43) Date of publication of application:
**03.09.86 Bulletin 86/36**

(45) Publication of the grant of the patent:
**17.07.91 Bulletin 91/29**

(84) Designated Contracting States:
**FR GB**

(56) References cited:
**DE-B- 1 248 124**
**US-A- 3 898 571**
**US-A- 4 193 075**
**US-A- 4 489 326**

(73) Proprietor: **HAZELTINE CORPORATION**
**500 Commack Road**
**Commack New York 11725(US)**

(72) Inventor: **Enein, Mohamed**
**1 Sandpiper Lane**
**Northport New York 11768(US)**
Inventor: **Strickland, Everett P.**
**88 E. 12th Street**
**Huntington Station New York 11746(US)**

(74) Representative: **Wood, Anthony Charles et al**
**Urquhart-Dykes & Lord 91 Wimpole Street**
**London W1M 8AH(GB)**

## Description

The invention generally relates to receivers for receiving scanning signals and, in particular, to an apparatus which receives signals having a predetermined time varying format such as a microwave landing system (MLS) receiver for receiving scanning signals provided by an MLS ground system.

The International Civil Aviation Organization (ICAO) has adopted a time reference scanning beam (TRSB) technique as the standard for civil microwave landing systems. MLS ground systems provide elevation (EL) and azimuth (AZ) scanning beams, each including a TO scan followed by a FRO scan, defining the area of coverage of the ground system. An MLS receiver located in an aircraft receives the EL scan and AZ scan and is able to determine the angular displacement of the MLS receiver in the aircraft with respect to the ground system. To do this, it is necessary to establish the centroids of the spatially swept EL and AZ scanning beams because the azimuth and elevation angles are a function of the time difference between the TO and FRO scans of each beam.

It is an object of this invention to provide a receiver with a preprocessor for detecting the centroids of spatially swept scanning beams.

EP-A-117662 describes apparatus for receiving recurring to and fro scanning signals comprising:

(a) an antenna for receiving the scanning signals;

(b) a converter for converting the received signals into intermediate frequency signals;

(c) a detector for detecting the intermediate frequency signals;

(d) an analog-to-digital converter for converting the detected intermediate frequency signals into digital signals;

(e) a digital peak detector for detecting the peak amplitudes of the digital signals; and

(f) a split gate processor.

The present invention is characterized in that:

(g) said split gate processor is operable to determine for each of the to and fro signals the respective first, second and third time periods for which the amplitude of the respective digital signal is greater than respective first, second and third predetermined levels below said detected peak amplitude; and

(h) processing means is provided for averaging for each of the to and fro signals the mid points of said time periods to provide a signal representative of the centroid of the respective digital signals, whereby the time duration between the two centroid signals permits determination of the angular bearing of the apparatus relative to the source of the recurring to and fro scanning signals.

An embodiment of the invention will now be described, by way of example, with reference to the accompanying drawings, in which:-

Figure 1 is a block diagram of an MLS receiver according to the invention.

Figure 2 is a block diagram of a microprocessor controlled automatic gain control for a receiver such as the MLS receiver illustrated in Figure 1.

Figure 3 is a block diagram illustrating a split gate processor as part of a digital processor of an MLS receiver as shown in Figure 1.

Figure 4 is a block diagram of the split gate processor.

Figure 5a and 5b are graphs illustrating the operation of the split gate processor of Figure 4.

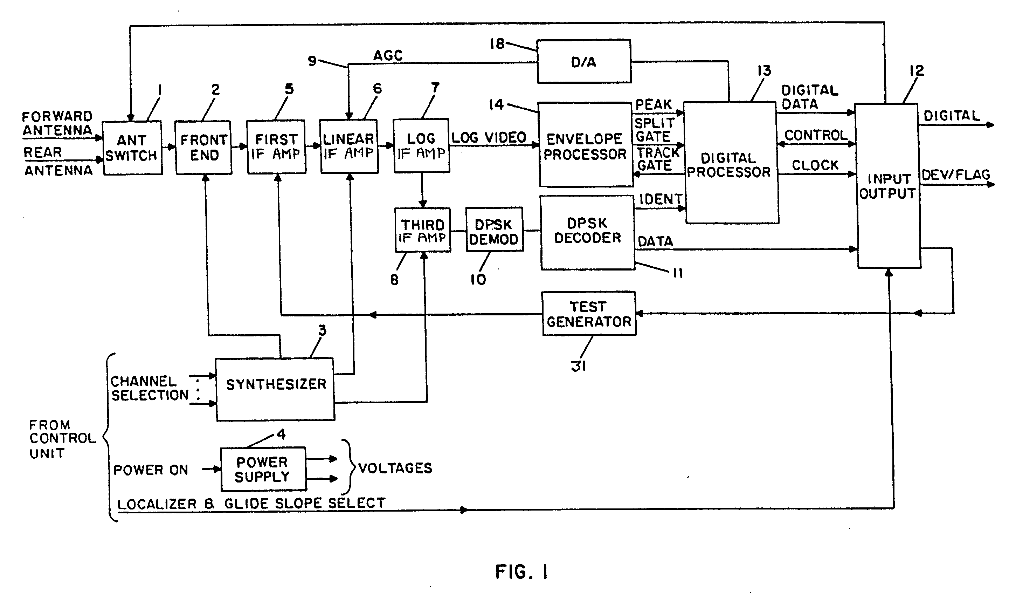

As illustrated in figure 1, the MLS receiver is provided with an antenna switch 1 which connects either the forward antenna or the rear antenna to front end 2. A control unit (not shown) provides channel selection information to frequency synthesizer 3 which, in turn, provides the appropriate reference frequency to front end 2 for down conversion of the received radio frequency (RF) signal to an intermediate frequency (IF). The control unit also provides power "on" information to power supply 4 which supplies voltages to the various components of the receiver.

MLS receivers require an IF amplifier having a dynamic range which exceeds 80dB. In order to achieve such a dynamic range, the receiver according to figure 1 includes an IF amplifier chain including a first IF amplifier 5 followed by a second IF amplifier consisting of linear IF amplifier 6 and logarithmic IF amplifier 7. The chain is followed by a third IF amplifier 8. Linear IF amplifier 6 and third IF amplifier 8 are provided with local oscillator (LO) frequencies by synthesizer 3 depending on the channel selection. This chain of amplifiers is designed with a linear-logarithmic response so that the logarithmic IF amplifier properties may be used without the difficulties attendant with an amplifier having a particular characteristic over the entire range.

For small signals, linear amplifiers 5 and 6 provide sufficient gain for the logarithmic IF amplifier 7 to operate within its range. As the signal level increases beyond an established level on an overall response curve of logarithmic IF amplifier 7, an AGC voltage is applied to linear IF amplifier 6 via line 9 to decrease the total gain of the linear amplifier so that logarithmic IF amplifier 7 is operating within its range. When the signal level provided by linear IF amplifier 6 decreases below an established level on the overall response curve of logarithmic IF amplifier 7, the AGC voltage remains constant and the gain of linear IF amplifier 6 is at a maximum. The result is that the first and linear IF amplifiers 5 and 6, respectively, maintain operation within the logarithmic response of the receiver characteristic as defined by logarithmic IF amplifier 7.

According to the ICAO standard, the scanning signals detected by the receiver are encoded with differential phase shift keying (DPSK) data. The output of third IF amplifier 8 is provided to DPSK demodulator 10 which is followed by DPSK decoder 11 for demodulating and decoding the data provided to input/output 12. Localizer and glide slope select information from the control unit (not shown) along with the decoded data are provided to the input/output 12 which controls antenna switch 1 and the deviation or "flag" indicators of the receiver. Input/output 12 also provides digital information to the control unit and provides control information to digital processor 13.

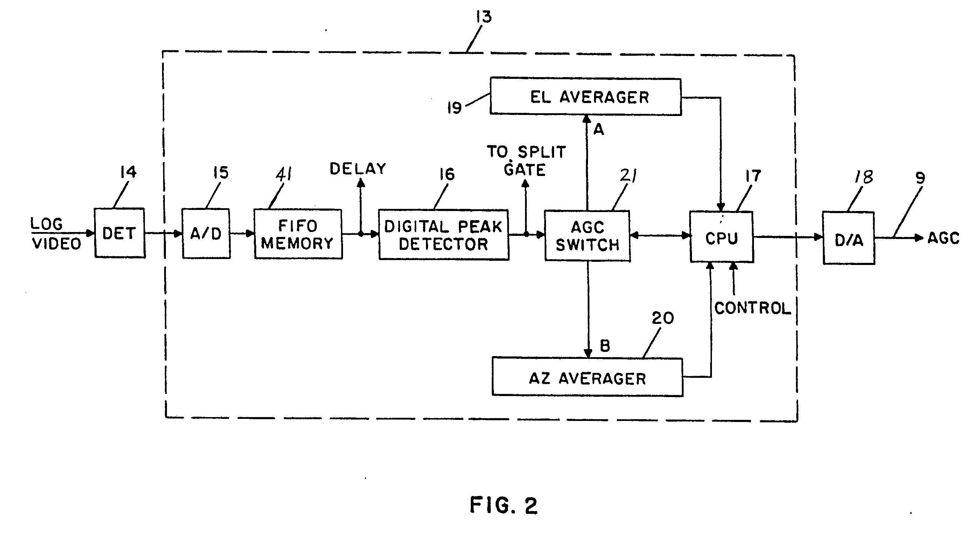

Logarithmic video information provided by logarithmic IF amplifier 7 is also provided to envelope processor 14. Since the receiver operates in a time division multiplexed mode in which the relative amplitudes of successive azimuth and elevation signals of interest may vary greatly but are predictable based on previously received signals, the previously received amplitude levels of the azimuth and elevation signals are stored for use in controlling the gain of linear IF amplifier 6. This allows the appropriate AGC voltage to be applied via line 9 prior to the anticipated detection of each angle function. Digital microprocessor 13 accomplishes this control. Figure 2 illustrates in detail the portions in digital processor 13 which achieve this result.

The required AGC level is determined by noting the peak amplitude of the received signal during each AZ and EL scan. The past several peaks corresponding to each beam scan, i.e. azimuth or elevation, are averaged after the received signal has been digitized. The appropriate AGC voltage is then selected and applied via line 9 to second IF amplifier 6. In the acquisition phase, when the signal level may be expected to deviate considerably from the desired level, the AGC correction is made gradually over several beam scans. When no signal is being received, the IF gain of linear IF amplifier 6 is fixed at a maximum by the supplied AGC voltage. It remains at a maximum as a beam is sensed until a first received signal has been decoded by decoder 11. At that time, the appropriate AGC voltage based on the previous signal strength, i.e. the second received signal strength, is applied to linear IF amplifier 6 so that the amplifier gain is established prior to the commencement of the angle scan. The IF gain remains unchanged until a second received signal has been decoded.

In particular, as shown in figure 2, the logarithmic video information provided by logarithmic amplifier 7 is provided to envelope detector (processor) 14. The resulting detected signal is digitized by analog-to-digital converter 15 and this digitized information is provided to digital peak detector 16. Central processing unit 17 of digital microprocessor 13 controls switch 21 based on control information provided by input/output 12. During each "EL" scan period, switch 21 is in the A position so that the digital peak information detected by detector 16 is provided to EL averager 19. During the "AZ" scan period, CPU 17 places switch 21 in the B position so that the digital peak information for the received AZ scan period as detected by detector 16, is provided to AZ averager 20. The average peak amplitude of the elevation and azimuth scans is provided to CPU 17 which, in turn, determines the AGC voltage necessary to maintain operation of logarithmic amplifier 7 within the range of its logarithmic characteristic. CPU 17 provides a digital signal representing the required AGC voltage to digital-to-analog converter 18 which converts the digital signal into an analog AGC voltage for application to the control input of linear IF amplifier 6.

The receiver may also be provided with a test generator 31, as shown in Figure 1, which is operated by input/output 12 in response to a test request from the control unit. Test generator 31 provides predetermined IF signals to the first IF amplifier 5 for initiating the test. Digital microprocessor 13 also provides digital data and clock information to input/output 12 and track gate information to envelope processor 14. Envelope processor 14 also provides split gate information to digital processor 13, and DPSK decoder 11 provides identification information to digital processor 13.

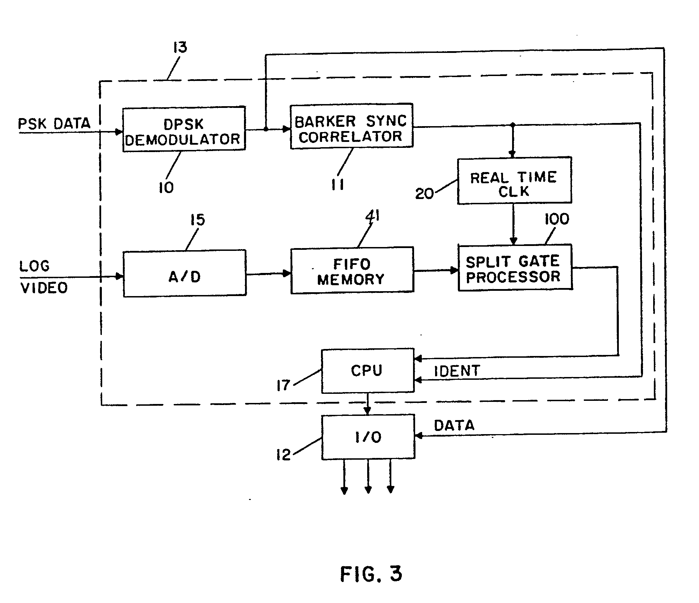

Figure 3 illustrates in block diagram form the portions of digital microprocessor 13 which are associated with split gate processor 100 according to the invention. Incoming data is demodulated by DPSK demodulator 10 and decoded by Barker synchronization correlator 11. The demodulated data is provided to input/output 12 and the correlated data provides identification information to CPU 17 as well as clock information to real time clock 20. Log video information is converted to digital information by analog-to-digital converter 15 and is stored in first-in-first out (FIFO) memory 41 before processing by split gate processor 100.

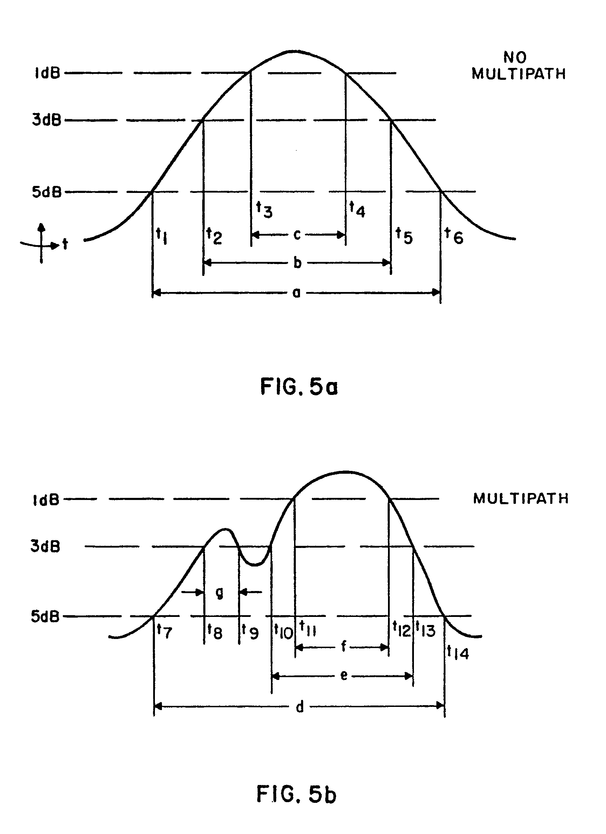

In a preferred environment in which multipath and other distortion effects are not present, it is possible to enable a counter when an incoming signal rises above a predetermined value below the peak amplitude of the signal. The counter may then be stopped when the amplitude falls below the same level on the other side of the peak. The centroid is then found by determining from the counter the time between rise and fall and relating it to a reference time. This is known as a dwell gate processing. An incoming signal which is not affected by multipath as illustrated in Figure 5a may be analyzed in this way. However, when the shape of the received signal within a dwell gate is distorted by a multipath return, as illustrated in Figure 5b, the apparent centroid is skewed from the true value.

In order to minimize error due to multipath, the processor analyzes the wave shape of the received signal. One way to accomplish this analysis is to establish a number of dwell gates at different levels below the peak. In this manner, the centroid is determined by observing the time intervals at representative levels of the signal. Generally, three levels are sufficient to define the centroid effectively. This is known as a split gate processor.

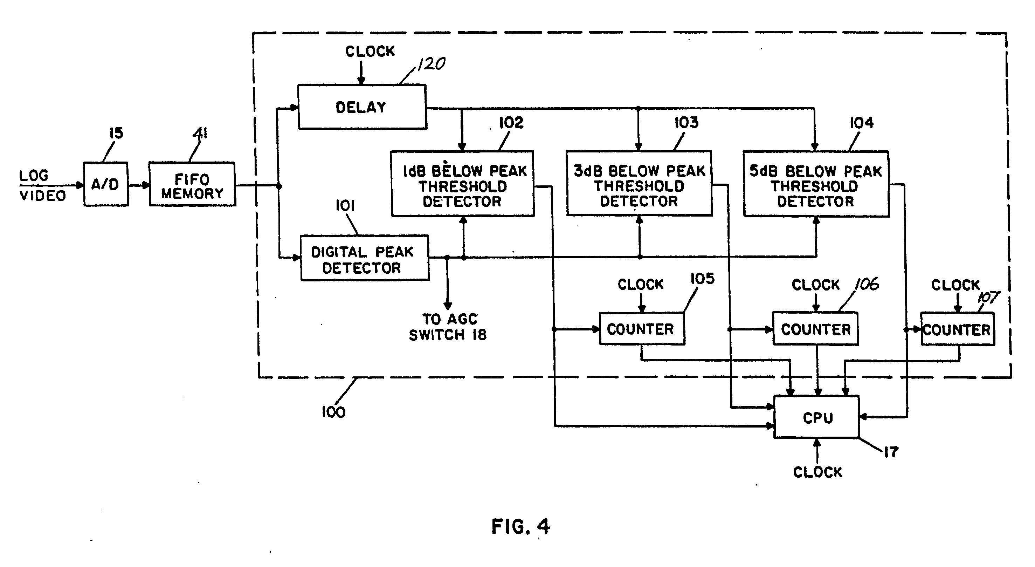

In order to fully understand the function of split gate processor 100 as illustrated in figure 4, it is necessary to describe the technique used in establishing the thresholds and determining the amplitudes of an incoming scanning signal. The analog detected signal is obtained by processing the incoming scanning signal through a linear/logarithmic amplifier chain as illustrated in figure 1 so that the output amplitude is maintained within the limits of the logarithmic transfer function. With such a transfer function, an incremental difference in the input signal is represented by a fixed level at the output at any point within the dynamic range of the system.

As illustrated in figure 4, the received signal is digitized by the A/D converter 15 and the results are stored in FIFO memory 41. The peak of the received signal is determined by digital peak detector 101. The peak information is provided to AGC switch 21 for averaging and to threshold detectors 102, 103 and 104. The digitized signal is delayed by delay 120 to allow peak detector 101 to complete its detection cycle and provide the detected information to threshold detectors 102, 103, and 104. The digitized, delayed signal is then provided to the threshold detectors 102, 103, 104 which respectively examine the delayed signal for points 5db, 3db, and 1db below the peak by subtracting the respective numbers representing those relationships from the peak value. It is possible when performing these measurements, since each measurement is being performed in real time, to determine when the 5db point is acquired on the rise of the pulse and when it appears again at the decay. When acquisition is identified, a counter is enabled, and the rise times are marked. The corresponding delay times are similarly noted.

In particular, threshold detector 102 detects amplitudes of the delayed, digitized signal which are 1db below the peak detected by digital peak detector 101. When a signal amplitude of 1db below the peak is detected, counter 105 is enabled and CPU 17 is signaled via control line to store the time at which counter 105 was enabled. When the signal is again detected on the decay at 1db below the peak, detector 102 disables counter 105. The total count from counter 105 indicates the time between the 1db below peak levels. Referring to figure 5a, counter 105 would be enabled at time $t_3$ and disabled at time $t_4$ with CPU 17 storing time $t_3$ and counter 105 storing a count representing the total time between $t_3$ and $t_4$. Referring to figure 5b illustrating the multipath case, counter 105 would be enabled at time $t_{11}$ and disabled at time $t_{12}$ with CPU 17 storing the enabling time $t_{11}$. Thereafter, CPU 17 performs the necessary calculations to derive the midpoint in time of the period detected at the 1db below peak level. Eventually, CPU 17 averages the separate times to determine the result of the information provided by all three counters to determine the centroid of the received signal.

Threshold detector 103 detects amplitudes of the delayed, digitized signal which are 3db below the peak detected by digital peak detector 101. When a signal amplitude of 3db below the peak is detected, counter 106 is enabled and CPU 17 is signaled via a control line to store the time at which counter 106 was enabled. When the signal is again detected on the decay at 3db below the peak, detector 103 disables counter 106. The total count from counter 106 indicates the time between the 3db below peak levels. Referring to figure 5a, counter 106 would be enabled at time $t_2$ and disabled at time $t_5$ with CPU 17 storing time $t_2$ and counter 106 storing a count representing the total time between $t_2$ and $t_5$. Referring to figure 5b illustrating the multipath case, counter 106 would be enabled at times $t_8$ and $t_{10}$ and disabled at times $t_9$ and $t_{13}$, respectively, with CPU 17 storing the enabling times $t_8$ and $t_{10}$. Thereafter, CPU 17 performs the necessary calculations to derive the midpoints in time of the periods detected at the 3db below peak levels.

Preferably, CPU 17 is programmed with an algorithm which rejects the extra crossings observed at any level. The result of such rejection is that the total error due to multipath distortion is minimized by the averaging process.

In particular, CPU 17 may be programmed to reject crossings $t_8$ and $t_9$ in the 3db below peak level. Based on such rejection, CPU 17 performs the necessary calculations to derive the midpoint in time of the unrejected period $t_{10}$ - $t_{13}$ detected at the 3db below peak level. Similarly, all levels below the detected level, i.e. the 5 db below peak level, would be adjusted by subtracting the period between the rejected crossings. Threshold detector 104 detects amplitudes of the delayed, digitized signal which are 5db below the peak detected by digital peak detector 101. When a signal amplitude of 5db below the peak is detected, counter 107 is enabled and CPU 17 is signaled via a control line to store the time at which counter 107 was enabled. When the signal is again detected on the decay at 5db below the peak, detector 104 disables counter 107. The total count from counter 107 indicates the time between the 5db below peak levels. Referring to figure 5a, counter 107 would be enabled at time $t_1$ and disabled at time $t_6$ with CPU 17 storing time $t_1$ and counter 107 storing a count representing the total time between $t_1$ and $t_6$. Referring to figure 5b illustrating the multipath case, counter 107 would be enabled at time $t_7$ and disabled at time $t_{14}$ with CPU 17 storing the enabling time $t_7$. Thereafter, CPU 17 subtracts period g from the total count and performs the necessary calculations to derive the midpoint in time of the corrected period detected at the 5db below peak level. Finally, CPU 17 averages the separate corrected times to determine the result of the information provided by all three counters to determine the centroid of the received signal.

## Claims

1. Apparatus for receiving recurring to and fro scanning signals comprising:

(a) an antenna for receiving the scanning signals;

(b) a converter (2) for converting the received signals into intermediate frequency signals;

(c) a detector (14) for detecting the intermediate frequency signals;

(d) an analog-to-digital converter (15) for converting the detected intermediate frequency signals into digital signals;

(e) a digital peak detector (101) for detecting the peak amplitudes of the digital signals; and

(f) a split gate processor (102-107);

characterized in that:

(g) said split gate processor (102-107) is operable to determine for each of the to and fro signals the respective first, second and third time periods for which the amplitude of the respective digital signal is greater than respective first, second and third predetermined levels below said detected peak amplitude; and

(h) processing means (17) is provided for averaging for each of the to and fro signals the mid points of said time periods to provide a signal representative of the centroid of the respective digital signals, whereby the time duration between the two centroid signals permits determination of the angular bearing of the apparatus relative to the source of the recurring to and fro scanning signals.

2. Apparatus according to claim 1 characterized by means (17) for rejecting, according to a predetermined algorithm, all except one such time period determined at any individual one of said predetermined levels.

3. Apparatus according to claim 1 or claim 2 characterized in that said split gate processor (102-107) includes delay means (120) for delaying the digital signal, a first threshold detector (102) for detecting the time points when the amplitude of the delayed digital signal moves across a first threshold representing said first predetermined level, a second threshold detector (103) for detecting the time points when the amplitude of the delayed digital signal moves across a second threshold representing said second predetermined level, and a third threshold detector (104) for detecting the time points when the amplitude of the delayed digital signal moves across a third threshold representing said third predetermined level.

4. Apparatus according to claim 3 characterized in that said split gate processor (102-107) includes a first counter (105) connected to said first threshold detector (102) for making a first count representative of the first time period, a second counter (106) connected to said second threshold detector (103) for making a second count representative of the second time period, and a third counter (107) connected to said third threshold detector (104) for making a third count representative of the third time period.

## Revendications

1. Appareil destiné à recevoir des signaux de balayage "aller" et "retour" récurrents, comprenant :

(a) une antenne destinée à recevoir les signaux de balayage ;

(b) un convertisseur (2) destiné à convertir les signaux reçus en signaux à fréquence intermédiaire ;

(c) un détecteur (14) destiné à détecter les signaux à fréquence intermédiaire ;

(d) un convertisseur analogique-numérique (15) destiné à convertir en signaux numériques les signaux à fréquence intermédiaire détectés ;

(e) un détecteur de crête numérique (101) destiné à détecter les amplitudes de crête des signaux numériques ; et

(f) un processeur à portes à seuils multiples (102-107) ;

caractérisé en ce que :

(g) le processeur à portes à seuils multiples (102-107) est capable de déterminer pour chacun des signaux "aller" et "retour" les premier, second et troisième intervalles de temps respectifs pour lesquels l'amplitude du signal numérique respectif est supérieure à des premier, second et troisième niveaux prédéterminés respectifs au-dessous de l'amplitude de crête détectée ; et

(h) des moyens de traitement (17) sont incorporés dans le but de faire la moyenne, pour chacun des signaux "aller" et "retour", des points milieux des intervalles de temps précités, de façon à fournir un signal représentatif du centroïde des signaux numériques respectifs, grâce à quoi la durée entre les deux signaux de centroïde permet la détermination du gisement de l'appareil par rapport à la source des signaux de balayage "aller" et "retour" récurrents.

2. Appareil selon la revendication 1, caractérisé par des moyens (17) destinés à rejeter, conformément à un algorithme prédéterminé, tous les intervalles de temps déterminés pour l'un individuel quelconque des niveaux prédéterminés, à l'exception d'un seul de ces intervalles de temps.

3. Appareil selon la revendication 1 ou la revendication 2, caractérisé en ce que le processeur à portes à seuils multiples (102-107) comprend des moyens de retard (120) qui sont destinés à retarder le signal numérique, un premier détecteur à seuil (102) qui est destiné à détecter les instants auxquels l'amplitude du signal numérique retardé franchit un premier seuil représentant le premier niveau prédéterminé, un second détecteur à seuil (103), destiné à détecter les instants auxquels l'amplitude du signal numérique retardé franchit un second seuil représentant le second niveau prédéterminé, et un troisième détecteur à seuil (104) qui est destiné à détecter les instants auxquels l'amplitude du signal numérique retardé franchit un troisième seuil représentant le troisième niveau prédéterminé.

4. Appareil selon la revendication 3, caractérisé en ce que le processeur à portes à seuils multiples (102-107) comprend un premier compteur (105) qui est connecté au premier détecteur à seuil (102) pour déterminer une première valeur de comptage représentative du premier intervalle de temps, un second compteur (106) qui est connecté au second détecteur à seuil (103) pour déterminer une seconde valeur de comptage représentative du second intervalle de temps, et un troisième compteur (107) qui est connecté au troisième détecteur à seuil (104) pour déterminer une troisième valeur de comptage représentative du troisième intervalle de temps.

## Patentansprüche

1. Vorrichtung zum Empfang von periodischen Hin- und Zurück-Abtastsignalen, mit:

(a) einer Antenne zum Empfangen der Abtastsignale;

(b) einem Wandler (2) zum Umwandeln der Empfangssignale in Zwischenfrequenzsignale;

(c) einem Detektor (14) zum Demodulieren der Zwischenfrequenzsignale;

(d) einem Analog-Digitalwandler (15) zum Umwandeln der demodulierten Zwischenfrequenzsignale in Digitalsignale;

(e) einem digitalen Spitzenwertdetektor (101) zum Gleichrichten der Spitzenamplituden der Digitalsignale; und

(f) einem Prozessor mit mehrschwelliger Torschaltung (102-107);

dadurch gekennzeichnet, daß

(g) der besagte Prozessor mit mehrschwelliger Torschaltung (102-107) so betrieben werden kann, daß er für jedes der Hin- und Zurücksignale die entsprechenden ersten, zweiten und dritten Zeitperioden bestimmt, für die die Amplitude des entsprechenden Digitalsignals höher als die entsprechenden ersten, zweiten und dritten vorbestimmten Pegel unterhalb der besagten gleichgerichteten Spitzenamplitude ist; und

(h) ein Verarbeitungsmittel (17) zur Durchschnittsbildung der Mittelpunkte der besagten Zeitperioden für jedes der Hin- und Zurücksignale vorgesehen ist, um ein den Schwerpunkt der entsprechenden Digitalsignale darstellendes Signal bereitzustellen, wodurch die Zeitdauer zwischen den zwei Schwerpunktsignalen die Bestimmung des Peilwinkels der Vorrichtung relativ zur Quelle der periodischen Hin- und Zurück-Abtastsignale erlaubt.

2. Vorrichtung nach Anspruch 1, gekennzeichnet durch Mittel (17) zum Abweisen nach einem vorbestimmten Algorithmus von allen außer einer solchen Zeitdauer, die auf einem beliebigen einzelnen der besagten vorbestimmten Pegel bestimmt worden ist.

3.  Vorrichtung nach Anspruch 1 oder Anspruch 2, dadurch gekennzeichnet, daß der besagte Prozessor mit mehrschwelliger Vorschaltung (102-107) Verzögerungsmittel (120) zum Verzögern des Digitalsignals, einen ersten Schwellwertdetektor (102) zum Erfassen der Zeitpunkte, wenn die Amplitude des verzögerten Digitalsignals eine erste, den besagten ersten vorbestimmten Pegel darstellende Schwelle überschreitet, einen zweiten Schwellwertdetektor (103) zum Erfassen der Zeitpunkte, wenn die Amplitude des verzögerten Digitalsignals eine zweite, den besagten zweiten vorbestimmten Pegel darstellende Schwelle überschreitet, und einen dritten Schwellwertdetektor (104) zum Erfassen der Zeitpunkte, wenn die Amplitude des verzögerten Digitalsignals eine dritte, den besagten dritten vorbestimmten Pegel darstellende Schwelle überschreitet, umfaßt.

4.  Vorrichtung nach Anspruch 3, dadurch gekennzeichnet, daß der besagte Prozessor mit mehrschwelliger Torschaltung (102-107) einen ersten, mit dem besagten ersten Schwellwertdetektor (102) verbundenen Zähler (105) zum Erstellen einer ersten, die erste Zeitdauer darstellenden Zählung, einen zweiten, mit dem besagten zweiten Schwellwertdetektor (103) verbundenen Zähler (106) zum Erstellen einer zweiten, die zweite Zeitdauer darstellenden Zählung und einen dritten, mit dem besagten dritten Schwellwertdetektor (104) verbundenen Zähler (107) zum Erstellen einer dritten, die dritte Zeitdauer darstellenden Zählung umfaßt.

FIG. I

EP 0 192 876 B1

LOG VIDEO

DET 14

A/D 15

FIFO MEMORY 41

DELAY

DIGITAL PEAK DETECTOR 16

TO SPLIT GATE

AGC SWITCH 21

EL AVERAGER 19

A

B

AZ AVERAGER 20

CPU 17

CONTROL

D/A 18

AGC 9

13

FIG. 2

FIG. 3

FIG. 4

EP 0 192 876 B1

FIG. 5a

FIG. 5b